# EUROPEAN PATENT SPECIFICATION

(11) **EP 1 694 427 B1**
(45) Date of publication and mention of the grant of the patent: **04.07.2012**
(21) Application number: 04768041.8
(22) Date of filing: 09.08.2004
(51) Int. Cl.: B01D 53/94, B01J 23/66, B01J 35/00, B01J 37/02

(54) **CATALYST STRUCTURE FOR TREATING NOx CONTAINING EXHAUST GAS FROM A LEAN BURN ENGINE**
KATALYSATOR-KONSTRUKTION ZUR BEHANDLUNG VON NOx-HALTIGEM ABGAS AUS EINEM MOTOR MIT MAGERGEMISCHVERBRENNUNG
STRUCTURE CATALYTIQUE POUR LE TRAITEMENT DE GAZ D'ECHAPPEMENT CONTENANT DU NOx A PARTIR D'UN MOTEUR A COMBUSTION PAUVRE

(30) Priority: 09.08.2003 GB 0318776
(43) Date of publication of application: 30.08.2006
(73) Proprietor: Johnson Matthey PLC, London EC4A 4AB (GB)
(72) Inventor: Golunski, Stanislaw Edmund, Reading RG4 9RR (GB); Houel, Valerie Marie Renee, Reading RG1 7JS (GB); Hawkins, Andrea, Reading RG1 4EE (GB); James, David William, Reading RG1 4EE (GB); Pollington, Stephen David, Washington, Tyne and Wear NE37 1LT (GB); Poulston, Stephen, Reading RG30 2SF (GB); Rajaram, Raj Rao, Slough SL3 7PH (GB)
(74) Representative: Nunn, Andrew Dominic
(86) International application number: PCT/GB2004/003470
(87) International publication number: WO 2005/016496

(56) References cited:
- EP-A- 0 577 438
- EP-A- 0 671 208
- EP-A- 0 714 693
- EP-A- 0 947 235
- EP-A- 1 033 161
- WO-A-02/16014
- WO-A-2004/022229
- US-A- 3 857 921
- US-A- 5 593 933

## Description

This invention relates to a catalyst structure for treating exhaust gas of a lean bum internal combustion engine comprising a lean NOₓ catalyst (LNC) composition. In particular, the invention concerns a catalyst structure wherein the LNC composition is silver or a silver compound supported on alumina.

LNCs are sometimes also referred to in the literature as non-selective catalytic reduction (NSCR) catalysts, hydrocarbon selective catalytic reduction (HC-SCR) catalysts, lean NOₓ reduction catalysts, "DeNOx catalysts" and NOₓ occluding catalysts.

In lean NOₓ catalysis, hydrocarbons (HC) react with nitrogen oxides (NOₓ), rather than oxygen (O₂), to form nitrogen (N₂), carbon dioxide (CO₂) and water (H₂O) according to reaction (1):

{HC}+ NOₓ→ N₂ + CO₂ + H₂O (1)

The competitive, non-selective reaction with oxygen is given by reaction (2):

{HC} + O₂ → CO₂ + H₂O (2)

A number of catalysts are known for selectively promoting the reaction (1) including platinum (Pt) on alumina (Al₂O₃), copper (Cu)-substituted zeolite such as Cu/ZSM-5 and silver (Ag) supported on Al₂O₃ (see e.g. EP 0658368).

Pt/Al₂O₃ is active in a relatively narrow temperature window at relatively low temperature (peak activity ~250°C). Another problem is that it is relatively unselective for N₂ formation in that it favours the formation of N₂O over N₂ at relatively low temperatures. N₂O is a potent greenhouse gas (200 times more potent than CO₂) and accordingly its release into the atmosphere is undesirable.

Zeolite-based LNCs, such as Cu/ZSM5, and Ag/Al₂O₃ LNCs have wider temperature windows of activity than Pt-based LNCs and also operate at higher temperatures (peak activity of about 400-450°C and above).

It would be desirable to develop an exhaust system for treating exhaust gas of a lean burn internal combustion engine for selectively reducing NOₓ to N₂ in the presence of a suitable reductant over a relatively broad temperature window of activity without producing N₂O.

The prior art includes a number of disclosures of Ag/Al₂O₃-containing catalysts.

EP 1033161 discloses a process for storing nitrogen oxide in a nitrogen oxide-containing gas e.g. of a vehicle exhaust in a silver containing solid by catalytically oxidising hydrocarbon upstream of the silver-containing solid, so that gas entering the Ag-containing soid is substantially hydrocarbon free.

EP 0714693 discloses a first exhaust gas cleaner for removing nitrogen oxides from a wide temperature range of exhaust gases comprising a first Ag catalyst, a second Ag catalyst, a transition metal catalyst selected from a Pt catalyst, a W catalyst, a W+Pt catalyst and a mixed catalyst of the Pt catalyst and the W catalyst. A second exhaust gas cleaner comprises a mixed catalyst of an Ag catalyst and a Cu catalyst.

EP 0947235 discloses an exhaust gas purifying catalyst comprising a first catalyst disposed in an exhaust gas stream for oxidizing NO to NO₂ and a second catalyst disposed in the exhaust gas stream downstream from the first catalyst for reducing the oxidized NO₂ which cracks hydrocarbons having a large carbon number to hydrocarbon having a small carbon number and causes the cracked HC to react with NO₂ so as thereby to reduce the NO₂. The first catalyst can be Ag/Al₂O₃.

EP 0577338 discloses an exhaust gas cleaner and method of cleaning exhaust gas, wherein nitrogen oxides are removed from an exhaust gas containing nitrogen oxides and oxygen in an amount larger than its stoichiometric amount relative to unburned components in the exhaust gas. The exhaust gas cleaner comprises Ag supported by a porous inorganic oxide body and a second catalyst containing a second catalytically active component supported by a porous inorganic oxide body. The second catalytically active component consists essentially of Cu and/or other metals such as alkali metal elements, rare earth elements, etc.

US 3857921 discloses a method of eliminating nitrogen oxides and a catalyst composition for use in practicing the method, which catalyst composition comprising iron or iron oxide, silver or silver oxide, at least a member selected from the group consisting of copper, beryllium, zinc, lead, indium, lanthanum, cerium and oxides of these metals, and a carrier.

US 5593933 discloses a catalyst for treating the exhaust gases produced during lean-bum engine operation, the gases comprising nitrogen oxides, carbon monoxide and hydrocarbons. The catalyst comprises a support material comprising gamma-alumina, a layer of about 0.01 to 1.5 wt. % tungsten deposited onto the support followed by a layer of about 1 to 3 wt. % silver, both being individually based on the weight of the support material.

WO 02/16014 discloses a method and apparatus for removing nitrogen oxides from internal combustion engine exhaust emissions consisting of the operations of contacting the exhaust emissions with a non-thermal plasma and a silver doped alumina catalyst and then an indium-doped zeolite catalyst.

EP 0671208 discloses an adsorption material exhibiting a superior adsorption capability relative to nitrogen oxides (NO) is constituted by an oxides-based ceramic system having an average crystallite grain size D in the range of D < 500 Å such as CeO₂ A representative catalyst comprises CeO₂ and zeolite and a content C of CeO₂ is in the range 10 weight% ≤ C ≤ 80 weight%. The zeolite is said to adsorb hydrocarbon (HC), and HC so adsorbed is said to be oxidized to activated CHO by CeO₂. Activated CHO is said to reduce NO adsorbed in the CeO_{2.}

We have investigated the known silver-based LNCs and we have found that their low temperature activity is improved when the reductant is an oxygenated hydrocarbon. Furthermore, we believe that the activity of Ag/Al₂O₃ is suppressed by coke formation, which may be one reason why it has not found wider acceptance in the industry. We have now discovered that selective, low temperature NOₓ reduction can be improved by combining known silver-based LNCs with at least one partial oxidation catalyst (POC).

A partial oxidation catalyst (POC) is a catalyst that promotes the partial oxidation of hydrocarbons in exhaust gas of a lean-bum internal combustion engine to carbon monoxide (CO), hydrogen gas (H₂) and partially oxygenated hydrocarbon species, as opposed to complete oxidation to H₂O and CO₂.

EP 1008379 describes a method and device for treating NOₓ in an internal combustion engine exhaust system comprising a POC upstream of a NOₓ trap, wherein hydrocarbons introduced into the exhaust system upstream of the POC are converted to CO and H₂ for regenerating the NOₓ trap.

EP 0761289 describes an exhaust gas cleaner and method for removing NOₓ by reduction from a lean bum internal combustion engine exhaust gas. According to the disclosure, nitrogen-containing compounds such as alkyl nitrites, ammonia etc. and aldehydes are produced on e.g. Ag/Al₂O₃ which are subsequently reduced by being brought into contact with a second catalyst of: (a) titania; (b) a titanium component supported on an inorganic oxide; (c) an inorganic oxide carrying at least one first component selected from the group consisting of copper, nickel, silver, cobalt and compounds thereof and at least one second component selected from the group consisting of titanium, zirconium and compounds thereof and a third component selected from the group consisting of alkali metal elements and rare earth elements; and (d) an inorganic oxide carrying a titanium component and at least one platinum group metal. The technique of non-selective catalytic reduction is specifically distinguished in the background to the disclosure.

According to a first aspect, the invention provides an apparatus comprising a lean-burn internal combustion engine including an exhaust system comprising a catalyst structure for treating exhaust gas from the engine, which catalyst structure comprising a substrate monolith comprising a lean NOₓ catalyst (LNC) composition associated with at least one partial oxidation catalyst (POC) and first means for introducing a reductant into an exhaust gas upstream of the at least one POC, wherein the LNC composition is silver or a silver compound supported on alumina and wherein the at least one POC is a bulk oxide, a bulk composite oxide or a bulk mixed oxide comprising at least one metal selected from the group consisting of manganese (Mn), iron (Fe), cerium (Ce) and praseodymium (Pr), wherein the LNC composition on the substrate monolith is located downstream of the at least one POC and wherein some or all of the LNC composition is located on a separate substrate monolith disposed downstream of the substrate monolith comprising the at least one POC, the apparatus comprising second means for introducing a reductant into an exhaust gas between the substrate monolith comprising the at least one POC and the separate downstream substrate monolith comprising LNC composition.

It is believed that where the silver is present as a compound thereof, it is present as its oxide. In use, the silver can be present in the form of its carbonate, hydroxide or nitrate by combining with components of the exhaust gas.

An advantage of the present invention is that low temperature NOₓ conversion activity e.g. from 200-350°C is enhanced compared with *Ag*/*Al₂O₃ per se.*

A further advantage of the Ag/Al₂O₃ embodiment of the invention is that the arrangement reduces or prevents coke formation on the LNC during extended periods at low temperature, improving the overall activity of the LNC.

For the purposes of comparison, we have investigated the catalyst described in JP 2002370031 which contains Ag on mixed oxides (3-40wt.% CeO₂ on alumina) and found it to be inactive as a LNC.

A suitable silver loading in the LNC composition is in the range 0.5 to 10.0 wt.% based on the total weight of the alumina. Any form of alumina can be used, in the present invention, such as alpha-, delta- or theta-alumina. However, we have found that the best performance is obtained when using high surface area gamma-aluminas.

Referring to the at least one POC, the bulk oxide, bulk composite oxide or bulk mixed oxide can comprise at least one stabiliser selected from the group consisting of: zirconium (Zr), lanthanum (La), aluminium (Al), yttrium (Y), Pr and neodymium (Nd). The at least one metal can form composite oxides or mixed oxides with the stabiliser. Suitable molar ratios of the at least one metal to the at least one stabiliser (in total) is 2:98M to 50:50M, where M is the at least one metal selected from the group consisting of Mn, Fe, Ce and Pr.

"Composite oxide" as defined herein means a largely amorphous oxide material comprising oxides of at least two elements which are not true mixed oxides consisting of the at least two elements.

A preferable POC of group (i) for use in the invention consists of bulk CeO₂, or a mixed oxide or composite oxide of Ce and Zr.

The or each POC bulk oxide, bulk composite oxide or bulk mixed oxide can be doped with at least one of lanthanum (La), barium (Ba), Ce, tungsten (W), Si and Mn to improve the stability of the support to high temperature ageing, act as a lean NOₓ promoter and/or improve the oxygen storage capacity of the system, the latter particularly in the case of manganese.

Suitable values of dopant addition are from 0.5 to 20wt%.

Typical weight ratios of the LNC composition to the at least one POC are in the range 20:1 to 1:5, optionally from 10:1 to 1:1.

Methods of preparing the LNC compositions according to the invention are known and include wet impregnation, ion-exchange and co-precipitation. A detailed discussion of which methods will not be made here, as the skilled person is aware of such techniques.

According to a second aspect, the invention provides an exhaust system for a lean-bum internal combustion engine comprising a catalyst structure according to the invention.

The catalyst structure of the present invention can be configured in a number of ways, the activity of some of which are shown in the accompanying Examples and Figures.

According to a third aspect according to the invention, an apparatus comprises a lean-bum internal combustion engine including an exhaust system according to the invention.

The exhaust system according to the present invention comprises means for introducing a reductant into an exhaust gas between the POC and the LNC composition and means for introducing a reductant into an exhaust gas upstream of the at least one POC. A reason for this is that in certain embodiments, e.g. wherein the POC is CeO₂, the POC tends to combust hydrocarbons completely at higher temperatures, hence NOₓ conversion is reduced on the downstream LNC composition because of lack of reductant. A second injector between the at least one POC bed and the LNC composition bed is used to inject hydrocarbon reductant over the LNC at temperatures which are too high for partial oxidation on the upstream at least one POC. In the case of CeO₂, a suitable temperature for injection of hydrocarbon between the at least one POC and downstream LNC composition is above about 350°C.

The means for introducing a reductant into an exhaust gas upstream of the LNC composition can comprise at least one of: means for injecting the reductant into the exhaust gas; means for adjusting the ignition timing of at least one engine cylinder; and means for adjusting the engine air-to-fuel ratio.

Typically, a source of hydrocarbon reductant comprises the fuel that powers the engine.

The apparatus can comprise means for controlling the or each reductant introducing means. In one embodiment, the control means is arranged, when in use, to introduce the reductant into the exhaust gas when the POC is from between 200-350°C in temperature, such as in the case where the POC is CeO₂ and is located upstream of the LNC composition. This arrangement can reduce or prevent complete combustion of hydrocarbon upstream of the LNC composition, to the detriment of higher temperature NOₓ reduction.

Generally, the control means can be arranged, when in use, to introduce the reductant into the exhaust gas when the LNC composition is above 200°C in temperature.

Typically, the control means can include a pre-programmed electronic control unit incorporating a processor and can form part of the engine control unit, for example. The exhaust system can include sensor means for inputting signals, such as bed temperature, tailpipe NOₓ composition and NOₓ content of the inlet gas, in order to regulate hydrocarbon injection, with the overall effect being to maintain a desired NOₓ conversion in the system.

The engine of the apparatus according to the invention is typically a diesel engine, optionally a heavy-duty diesel engine, but it can be any engine producing lambda >1 exhaust gas e.g. a lean-bum gasoline engine or an engine powered by compressed natural gas (CNG) or liquid petroleum gas (LPG).

A suitable substrate monolith for use in the present invention can be a flow-through monolith of metal or ceramic construction. Where ceramic, the substrate can be cordierite or silicon carbide, for example.

If desired, the catalyst structure of the present invention can be combined with one or more additional LNCs to yield an exhaust system with yet further improved activity across a desired temperature window.

In order that the invention may be more fully understood, the following Examples are provided by way of illustration only and with reference to the accompanying drawings, in which:
Figure 1 is a graph comparing %NOₓ conversion between steady state and transient modes for Comparative Example 1 as a function of temperature;
Figure 2 is a graph showing %NOₓ conversion over the Catalyst of Example 1 compared with the Catalyst of Comparative Example 2 in the steady state mode as a function of temperature;
Figure 3 is a graph showing the outlet NOₓ concentration as a function of time at 200°C, 250°C and 300°C over 2%Ag/Al₂O₃ and the 2Ag/Al₂O₃-CeO₂ mixture in the steady mode;
Figure 4 is a graph showing the effect of ramp down (steady state 15 minutes) and ramp up (steady state 15 minutes) on NOₓ conversion of 2Ag/Al₂O₃-CeO₂ (4:1);
Figure 5 is a graph showing the effect of ramp down (steady state 15 minutes) and ramp up (steady state 15 minutes) on HC conversion of 2Ag/Al₂O₃-CeO₂ (4:1);
Figure 6 is a graph comparing the effect of ageing on Comparative Example 1 and Example 1 catalysts on NOₓ conversion;
Figure 7 is a graph showing %NOₓ conversion as a function of temperature for 5Cu/ZSM5 catalyst structures compared with 5Cu/ZSM5 catalyst per se;
Figure 8 is a graph showing %NOₓ conversion as a function of temperature for 2Ag/Al₂O₃ catalyst structures compared with 2Ag/Al₂O₃ catalyst per se; and
Figure 9 is a graph showing %NOₓ conversion as a function of temperature for a\ catalyst according to JP 2002370031 compared with 2Ag/Al₂O₃ and 5Cu/ZSM5 catalyst structures according to the invention.

### Comparative Example 1

### 2 wt%As/Al₂O₃Catalyst Preparation

An impregnated Ag catalyst at 2wt% Ag based on the weight of the Al₂O₃ support (referred to hereinafter as 2Ag/Al₂O₃) was made using silver nitrate by a wet impregnation method. The silver nitrate was dissolved in the appropriate amount of water measured from the pore volume of an Al₂O₃ support. The solution was then added to the Al₂O₃ with mixing. After drying overnight, the sample was calcined in air at 500°C for 2 hours. The resulting catalyst was pelleted and particles in the size range 250<d<355 µm were selected.

### Comparative Example 2

### Mixed 4:1 2 wt%Ag/Al₂O₃:cordierite Catalyst Preparation

The pelleted catalyst particles in the size range 250<d<355 µm prepared according to Comparative Example 1 were physically mixed with pelleted particles of cordierite of the same size in a weight ratio of 4:1 2Ag/Al₂O₃:cordierite.

### Example 1

### 4:1 2 wt%Ag/Al₂O₃:CeO₂ Catalyst Preparation

The pelleted catalyst particles in the size range 250<d<355 µm prepared according to Comparative Example 1 were physically mixed with pelleted particles of bulk ceria of the same size in a weight ratio of 4:1 2Ag/Al₂O₃:ceria.

### Example 2

### Coated substrate including 2 wt%A_{g}/Al₂O₃

Three cores from ceramic flow-through monolith substrates were prepared, each 2.54cm (1 inch) in diameter and 7.62 cm (3 inches) in length. A first core was coated with a washcoat containing the powder form of the catalyst of Comparative Example 1. The Ag/Al₂O₃ loading was 2.5g per cubic inch (152.6g per litre). A second core was coated with a first layer of CeO₂ powder and a second layer (overlayer) of the catalyst of Comparative Example 1 at the same loading as the first core. The catalyst loading of the 2Ag/Al₂O₃:CeO₂ was 4:1. In the third core, one end of the core was coated with a first layer of the same amount of CeO₂ powder as the second core to a depth of 2.54 cm (one inch), and a second layer (overlayer) of the catalyst of Comparative Example 1 at the same loading as the first core. The catalyst loading of 2Ag/Al₂O₃:CeO₂ on the whole of the third core was 4:1.

### Example 3 (not according to the invention)

### Coated substrate including 5 wt%Cu/ZSM5

Example 2 was repeated except in that a 5wt% Cu/ZSM5 catalyst prepared by wet impregnation was used instead of the powdered 2Ag/Al₂O₃ catalyst.

### Comparative Example 3

**Coated Substrate including catalyst of** JP 2002370031

A ceramic flow-through monolith substrate core 2.54cm (1 inch) in diameter and 7.62 cm (3 inches) in length was coated with alumina powder at a loading of 2.5 g per cubic inch (152.6g per litre) and the coated core was dried. The washcoated alumina was then impregnated with a mixture of silver and cerium salts to achieve a final catalyst loading of 2wt% silver and 10wt% cerium, and the resulting piece was dried and calcined. As far as the abstract of this patent publication can be understood, the above arrangement falls within its teaching.

### Example 4

### Activity Measurements

The activity of the pelleted catalysts to reduce NO to N₂ using MK1 (diesel fuel) as the reductant was measured in a simulated catalyst activity test (SCAT) gas rig species. The simulated exhaust gas composition used in the test was as follows: NO 500ppm, C1 2250ppm (MK1 diesel fuel), CO 200ppm, O₂ 9%, H₂O 4.5%, CO₂ 4.5%, N₂ balance (Cl:NOₓ 4.5:1). The data was collected in one of two modes:
(i) steady state conditions with 15 minutes dwell at each temperature, (data points collected at the end of 15 minutes); or
(ii) transient ramp up at 10°C per minute temperature from 200°C to 500°C.

The coated cores were tested only under steady state conditions (data collection as above) in the following simulated exhaust gas composition: NO 500ppm, Cl 2250ppm (US06 diesel fuel), CO 200ppm, O₂ 8%, H₂O 4.5%, CO₂ 4.5%, N₂ balance (C1:NOₓ 4.5: 1).

### Comparative Example 4

### Results of Activity Measurements on Catalyst of Comparative Example 1

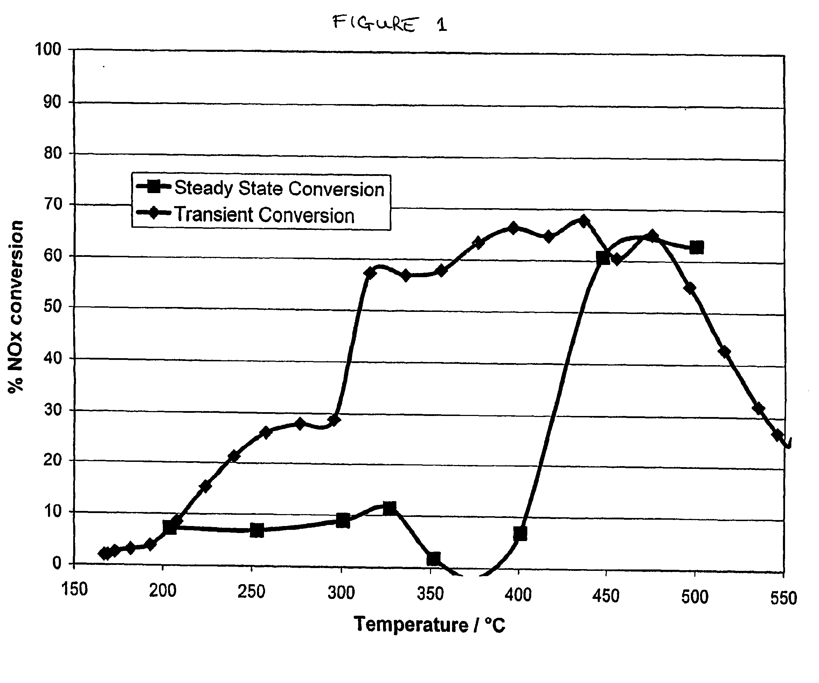

Figure 1 shows a graph comparing %NOₓ conversion between steady state and transient modes for the catalyst of Comparative Example 1 as a function of temperature. It can be seen that the sample is very active for NOₓ conversion between 300°C and 550°C (~60% conversion) in the transient mode, but it is severely deactivated in the steady state mode compared with the transient mode. We believe that this deactivation is caused by carbon species ("coke") deposited on the catalyst surface after exposure to the gas mixture for long periods at low temperature. Such conditions can be encountered in the exhaust of a diesel engine. Reasons for the above conclusion include our finding that catalyst deactivation is less severe at a C1:NOₓ ratio of 3:1 and activity is restored by heating the deactivated catalyst in the reaction mixture at 550°C (results not shown).

### Example 5

### Results of Activity Measurements on Catalyst of Example 1

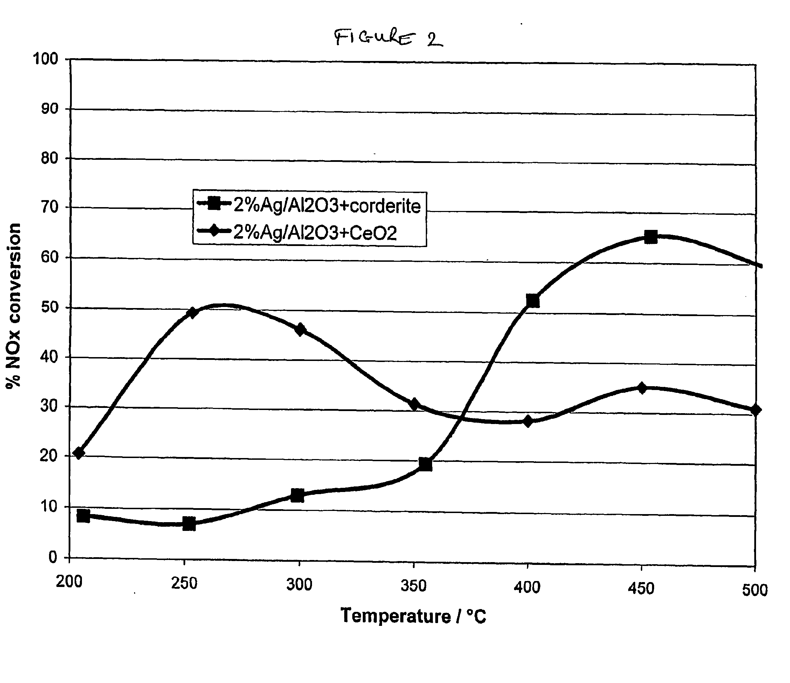

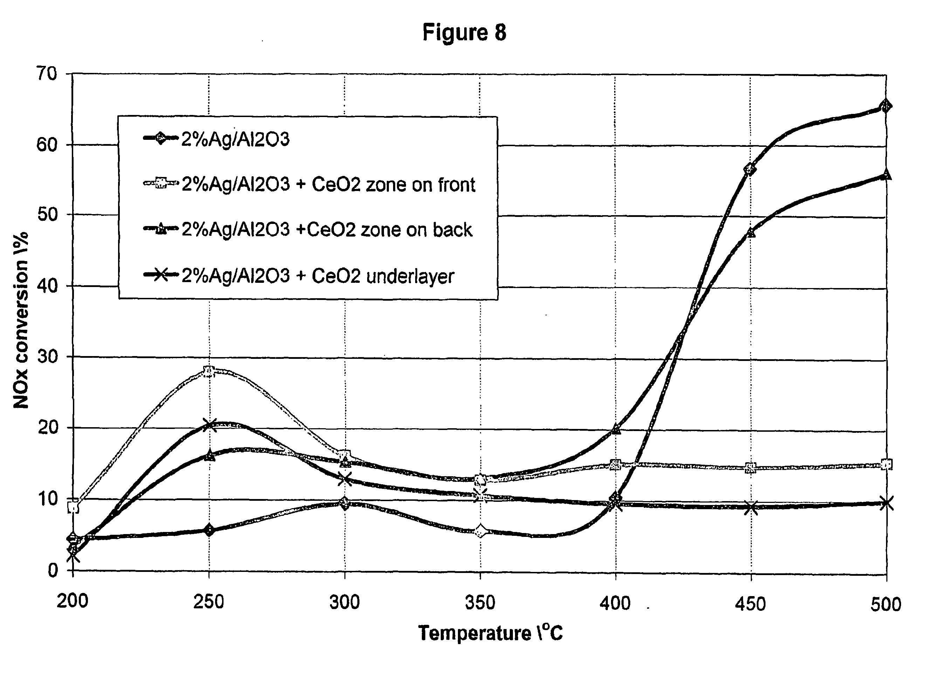

Figure 2 shows the %NOₓ conversion activity over the 2Ag/Al₂O₃-CeO₂ catalyst of Example 1 compared with the 2Ag/Al₂O₃ catalyst of Comparative Example 2 in the steady state mode as a function of temperature. The results show that the addition of particulate CeO₂ to the 2Ag/Al₂O₃ catalyst greatly enhances its activity between 200°C-350°C. We believe that this results from generation of partial oxidation products from the MK1 hydrocarbon in the low temperature region which promote NOₓ reduction on the 2Ag/Al₂O₃ LNC. The control sample mixed with cordierite has no significant activity in this temperature region. Higher temperature activity is lower with the 2Ag/Al₂O₃-CeO₂ mixture due to the non-selective HC oxidation over the CeO₂, but this is dependent on the configuration of the catalyst structure as shown in Example 9 and Figure 8.

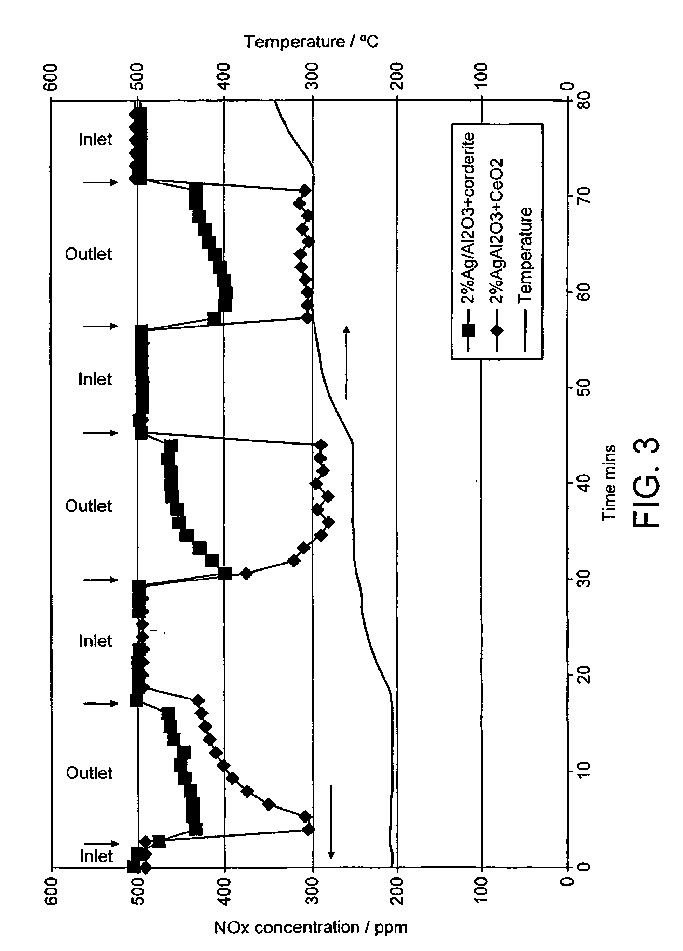

Figure 3 shows the outlet NOₓ concentration (ppm) as a function of time at 200°C, 250°C and 300°C over a 2Ag/Al₂O₃ catalyst of Comparative Example 1 and the 2Ag/Al₂O₃-CeO₂ catalyst of Example 1 in the steady mode. The detectors were switched to measure inlet NOₓ concentration during periods of temperature adjustment. The 2Ag/Al₂O₃-CeO₂ catalyst shows substantially no decay in activity during the 15 minute steady state data collection period at 250°C and 300°C compared with the 2Ag/Al₂O₃ catalyst. We believe that this is due to a combination of: the absence of any coke deposition on the 2Ag/Al₂O₃-CeO₂ catalyst; and the feed stock containing reformed i.e. partially oxidised MK1 hydrocarbon products that are particularly effective for promoting NOₓ reduction. It can be seen that at 200°C, NOₓ conversion tails off over the 2Ag/Al₂O₃ catalyst, possibly as a result of coking of the catalyst.

### Example 6

### Results of Activity Measurements: Steady State Ramp-Up and Ramp-Down on Catalyst of Example 1

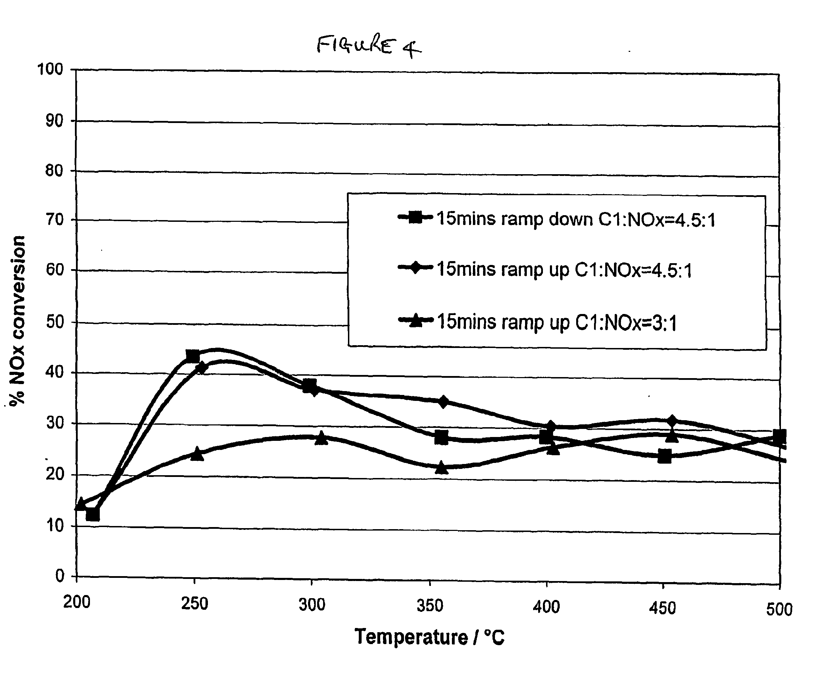

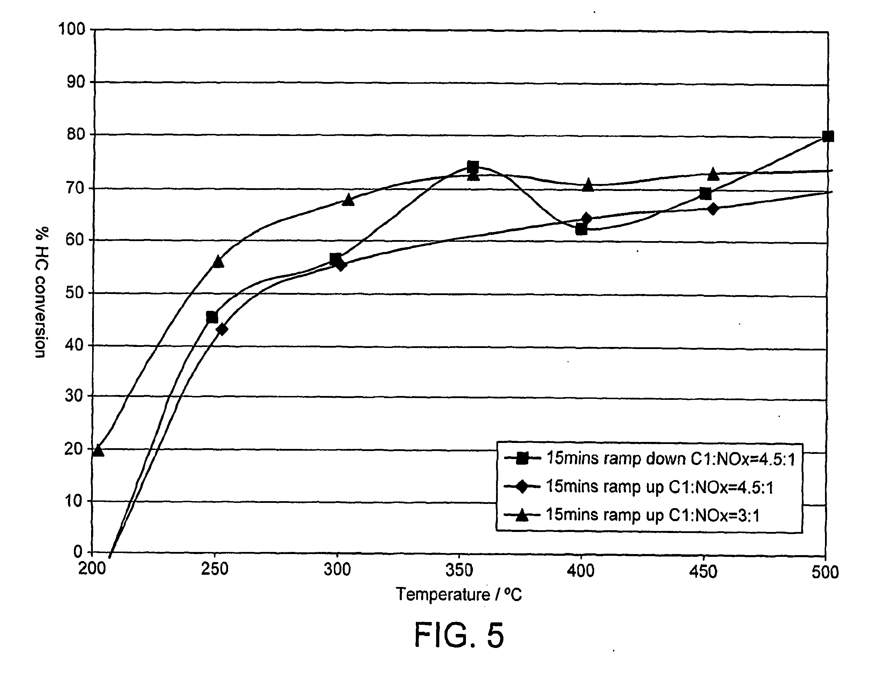

The activity of the 2Ag/Al₂O₃-CeO₂ catalyst under steady state conditions from 500°C to 200°C and then from 200°C to 500°C (C1:NOₓ=4.5:1) was measured and the results are shown in Figures 4 and 5 respectively, following the procedure illustrated in Figure 3. The NOₓ and HC conversion are similar between ramp down and ramp up and no catalyst deactivation was observed. The effect of lowering the C1:NOₓ ratio to 3:1 is also shown. In contrast to previous results with 2Ag/Al₂O₃ alone, the NOₓ conversion is lower at low temperature at a C1:NOₓ ratio of 3:1. The results are summarised in Table 1.

**Table 1: Effect of CeO₂ addition on 2Ag/Al₂O₃ lean NOₓ activity.**

| **Catalyst** | **NOx conversion** | | | **HC conversion** | | |
|---|---|---|---|---|---|---|
| | **200°C** | **250°C** | **300°C** | **200°C** | **250°C** | **300°C** |
| **2Ag/Al₂O₃ +corderite** | 8 | 7 | 13 | -- | -- | -- |
| **2Ag/AhO₃-CeO₂** | 12 | 41 | 37 | 1 | 43 | 56 |
| **2Ag/Al₂O₃-CeO₂*** | 14 | 24 | 28 | 19 | 56 | 68 |

| | | | | | | |
|---|---|---|---|---|---|---|
| *C1:NOx=3:1 | | | | | | |

### Example 7

### Catalyst Ageing

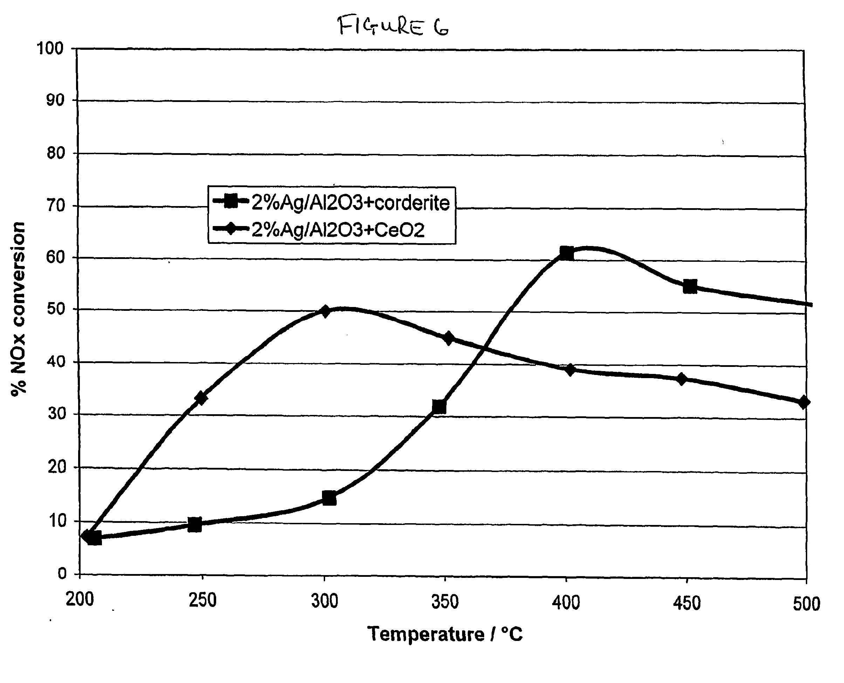

The 2Ag/Al₂O₃ and 2Ag/Al₂O₃-CeO₂ catalysts were lean hydrothermally aged in a 10% H₂O and air mixture at 700°C for 16 hours and the steady state activity of the resulting catalysts are shown in Fig 6. It can be seen that even after the high temperature ageing, the presence of CeO₂ is beneficial to the low temperature activity.

### Example 8 (not according to the invention)

### Results of Activity Measurements on Catalyst Cores of Example 3

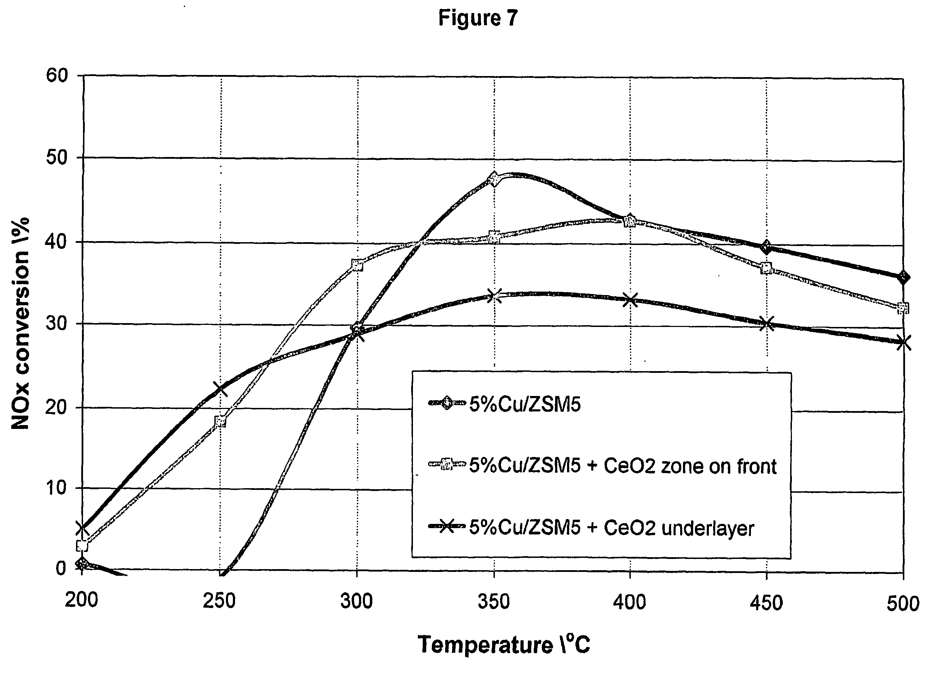

The results of steady state analysis tests performed on the catalyst cores of Example 3, wherein the third core was oriented with the CeO₂ zone on the upstream side are shown in Figure 7. It can be seen that low temperature NOₓ conversion in the 5Cu/ZSM5 core is improved for the catalyst structures containing CeO₂ relative to 5Cu/ZSM5 *per se.* We believe that this results from the supply of partially oxidised US06 hydrocarbon products to the LNC at low temperature.

### Example 9

### Results of Activity Measurements on Catalyst Cores of Example 2

The results of steady state analysis tests performed on the catalyst cores of Example 2 are shown in Figure 7. Two configurations of the third core were tested: the CeO₂ zone on the upstream end; and the CeO₂ zone on the downstream end. It can be seen that low temperature NOₓ conversion in the 2Ag/Al₂O₃ core is improved for the catalyst structures containing CeO₂ relative to 2Ag/Al₂O₃ *per se.* We believe that this results from a combination of partial oxidation products in the feedstock contacting the LNC and reduced coking of the LNC. Higher temperature NOₓ conversion is suppressed in the configurations wherein the CeO₂ is present in the upstream zone of the core relative to 2Ag/Al₂O₃ *per se,* because the CeO₂ favours complete combustion of the hydrocarbon instead of partial oxidation at higher temperatures. However, this can be retained with improved low temperature NOₓ conversion relative to 2Ag/Al₂O₃ *per se* when the mixed 2Ag/Al₂O₃-CeO₂ zone is on the downstream end of the core with 2Ag/Al₂O₃ *per se* on the upstream end zone.

### Comparative Example 4

### Results of Activity Measurements on Catalyst of Comparative Example 3

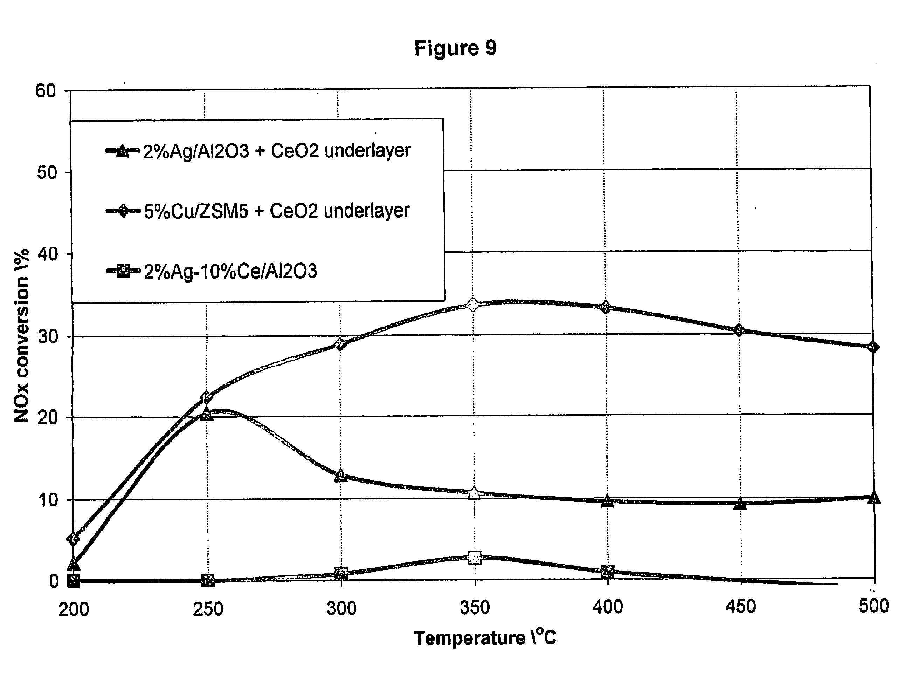

The activity of the catalyst of JP 2002370031 tested under steady state conditions is shown in Figure 9, compared to the activity of comparable catalyst arrangements of the 5Cu/ZSM5 and 2Ag/Al₂O₃ embodiments according to the invention.

## Claims

1. An apparatus comprising a lean-bum internal combustion engine including an exhaust system comprising a catalyst structure for treating exhaust gas from the engine, which catalyst structure comprising a substrate monolith comprising a lean NOₓ catalyst (LNC) composition associated with at least one partial oxidation catalyst (POC) and first means for introducing a reductant into an exhaust gas upstream of the at least one POC, wherein the LNC composition is silver or a silver compound supported on alumina and wherein the at least one POC is a bulk oxide, a bulk composite oxide or a bulk mixed oxide comprising at least one metal selected from the group consisting of manganese (Mn), iron (Fe), cerium (Ce) and praseodymium (Pr), wherein the LNC composition on the substrate monolith is located downstream of the at least one POC and wherein some or all of the LNC composition is located on a separate substrate monolith disposed downstream of the substrate monolith comprising the at least one POC, the apparatus comprising second means for introducing a reductant into an exhaust gas between the substrate monolith comprising the at least one POC and the separate downstream substrate monolith comprising LNC composition.

2. An apparatus according to claim 1, wherein the silver in the LNC composition is present in the range 0.5 to 10.0 wt% based on the total weight of the alumina support.

3. An apparatus according to claim 1 or 2, wherein the bulk oxide, bulk composite oxide or bulk mixed oxide of the at least one POC comprises at least one stabiliser selected from the group consisting of: zirconium (Zr), lanthanum (La), aluminium (Al), yttrium (Y), Pr and neodymium (Nd), wherein optionally the at least one stabiliser is present in the molar ratio 2:98M to 90:10M, where M is the at least one metal selected from the group consisting of Mn, Fe, Ce and Pr.

4. An apparatus according to any preceding claim, wherein the weight ratio of the LNC composition to the at least one POC is from 20:1 to 1:5, optionally from 10:1 to 1:1.

5. An apparatus according to any preceding claim, wherein the or each reductant introducing means comprises at least one of: means for injecting the reductant into exhaust gas in the exhaust system; means for adjusting the ignition timing of at least one engine cylinder; and means for adjusting the engine air-to-fuel ratio.

6. An apparatus according to any preceding claim comprising a source of hydrocarbon reductant.

7. An apparatus according to any preceding claim, comprising means for controlling the or each reductant introducing means.

8. An apparatus according to claim 7, wherein the control means is arranged, when in use, to introduce the reductant into the exhaust gas via the first reductant introducing means when the at least one POC is from between 200-350 °C in temperature.

9. An apparatus according to claim 7, wherein the control means is arranged, when in use, to introduce the reductant via the second reductant introducing means between the at least one POC and the LNC composition at a temperature of above 350 °C.

10. An apparatus according to any preceding claim, wherein the engine is a diesel engine, optionally a heavy-duty diesel engine.

## Patentansprüche

1. Vorrichtung, die einen Magerverbrennungsmotor, der eine Abgasanlage enthält, die eine Katalysatorstruktur zur Behandlung von Abgas aus dem Motor umfasst, wobei die Katalysatorstruktur einen Trägermonolith umfasst, der einen Mager-NOₓ-Katalysatorzusammensetzung (MNK-Zusammensetzung) umfasst, die mit mindestens einem Partialoxidationskatalysator (POK) in Verbindung steht, und ein erstes Mittel zum Einbringen eines Reduktionsmittels in ein Abgas stromaufwärts des mindestens einen POK umfasst, wobei die MNK-Zusammensetzung Silber oder eine Silberverbindung ist, das bzw. die auf Aluminiumoxid geträgert ist, und wobei der mindestens eine POK ein Volumenoxid, ein Volumenverbundoxid oder Volumenmischoxid ist, das mindestens ein Metall umfasst, das aus der Gruppe bestehend aus Mangan (Mn), Eisen (Fe), Cer (Ce) und Praseodym (Pr) ausgewählt ist, wobei die MNK-Zusammensetzung auf dem Trägermonolith sich stromabwärts des mindestens einen POK befindet und wobei ein Teil der oder die gesamte MNK-Zusammensetzung sich auf einem separaten Trägermonolith befindet, der stromabwärts des Trägermonoliths, der den mindestens einen POK umfasst, angeordnet ist, wobei die Vorrichtung ein zweites Mittel zum Einbringen eines Reduktionsmittels in ein Abgas zwischen dem Trägermonolith, der den mindestens einen POK umfasst, und dem separaten stromabwärtigen Trägermonolith, der die MNK-Zusammensetzung umfasst, umfasst.

2. Vorrichtung nach Anspruch 1, wobei das Silber in der MNK-Zusammensetzung im Bereich von 0,5 bis 10,0 Gew.-%, bezogen auf das Gesamtgewicht des Aluminiumoxidträgers, vorliegt.

3. Vorrichtung nach Anspruch 1 oder 2, wobei das Volumenoxid, das Volumenverbundoxid oder das Volumenmischoxid des mindestens einen POK mindestens ein Stabilisierungsmittel umfasst, das aus der Gruppe bestehend aus Zirkon (Zr), Lanthan (La), Aluminium (AI), Yttrium (Y), Pr und Neodym (Nd) ausgewählt ist, wobei gegebenenfalls das mindestens eine Stabilisierungsmittel in dem Molverhältnis 2:98 M bis 90:10 M vorliegt, wobei M das mindestens eine Metall ist, das aus der Gruppe bestehend aus Mn, Fe, Ce und Pr ausgewählt ist.

4. Vorrichtung nach einem der vorhergehenden Ansprüche, wobei das Gewichtsverhältnis der MNK-Zusammensetzung zu dem mindestens einen POK 20:1 bis 1:5, gegebenenfalls 10:1 bis 1:1 beträgt.

5. Vorrichtung nach einem der vorhergehenden Ansprüche, wobei das oder jedes Reduktionsmitteleinbringmittel wenigstens eins aus: ein Mittel zum Einspritzen des Reduktionsmittels in Abgas in der Abgasanlage; ein Mittel zum Einstellen des Zündzeitpunkts von mindestens einem Motorzylinder und/oder ein Mittel zum Einstellen des Luft-Benzin-Verhältnisses des Motors, umfasst.

6. Vorrichtung nach einem der vorhergehenden Ansprüche, die eine Quelle eines Kohlenwasserstoffreduktionsmittels umfasst.

7. Vorrichtung nach einem der vorhergehenden Ansprüche, die ein Mittel zum Steuern des oder jedes Reduktionsmitteleinbringmittels umfasst.

8. Vorrichtung nach Anspruch 7, wobei das Steuermittel im Gebrauch dazu eingerichtet ist, das Reduktionsmittel durch das erste Reduktionsmitteleinbringmittel in das Abgas einzubringen, wenn der mindestens eine POK eine Temperatur zwischen 200 und 350 °C hat.

9. Vorrichtung nach Anspruch 7, wobei das Steuermittel im Gebrauch dazu eingerichtet ist, das Reduktionsmittel durch das zweite Reduktionsmitteleinbringmittel zwischen den mindestens einen POK und die MNK-Zusammensetzung bei einer Temperatur von mehr als 350 °C einzubringen.

10. Vorrichtung nach einem der vorhergehenden Ansprüche, wobei der Motor ein Dieselmotor, gegebenenfalls ein Dieselmotor für einen Schwerkraftlastwagen ist.

## Revendications

1. Dispositif comprenant un moteur à combustion interne à mélange pauvre incluant un système d'échappement comprenant une structure de catalyseur pour traiter des gaz d'échappement du moteur, laquelle structure de catalyseur comprenant un substrat monolithe comprenant une composition de catalyseur de NOₓ pauvre (LNC) associée avec au moins un catalyseur d'oxydation partielle (POC) et un premier moyen pour introduire un réducteur dans un gaz d'échappement en amont de l'au moins un POC, dans lequel la composition de LNC est de l'argent ou un composé d'argent supporté sur une alumine et dans lequel l'au moins un POC est un oxyde en volume, un oxyde composite en volume ou un oxyde mixte en volume comprenant au moins un métal choisi parmi le groupe consistant en le manganèse (Mn), le fer (Fe), le cérium (Ce) et le praséodyme (Pr), dans lequel la composition de LNC sur le substrat monolithe est située en aval de l'au moins un POC et dans lequel une partie ou la totalité de la composition de LNC est située sur un substrat monolithe séparé disposé en aval du substrat monolithe comprenant l'au moins un POC, l'appareil comprenant un deuxième moyen pour introduire un réducteur dans un gaz d'échappement entre le substrat monolithe comprenant l'au moins un POC et le substrat monolithe aval séparé comprenant la composition de LNC.

2. Dispositif selon la revendication 1, dans lequel l'argent dans la composition de LNC est présent dans la plage de 0,5 à 10,0% en poids sur la base du poids total du support d'alumine.

3. Dispositif selon la revendication 1 ou 2, dans lequel l'oxyde en volume, l'oxyde composite en volume ou l'oxyde mixte en volume de l'au moins un POC comprend au moins un stabilisant choisi parmi le groupe consistant en : le zirconium (Zr), le lanthane (La), l'aluminium (AI), l'yttrium (Y), le Pr et le néodyme (Nd), dans lequel, facultativement, l'au moins un stabilisant est présent dans le rapport molaire 2:98 M à 90:10 M, où M est l'au moins un métal choisi parmi le groupe consistant en Mn, Fe, Ce et Pr.

4. Dispositif selon l'une quelconque des revendications précédentes, dans lequel le rapport pondéral de la composition de LNC sur l'au moins un POC est de 20:1 à 1:5, facultativement de 10:1 à 1:1.

5. Dispositif selon l'une quelconque des revendications précédentes, dans lequel le ou chaque moyen d'introduction de réducteur comprend au moins l'un parmi: un moyen pour injecter le réducteur dans le gaz d'échappement dans le système d'échappement ; un moyen pour ajuster le calage d'allumage d'au moins un cylindre du moteur ; et un moyen pour ajuster le rapport air-carburant du moteur.

6. Dispositif selon l'une quelconque des revendications précédentes comprenant une source de réducteur d'hydrocarbures.

7. Dispositif selon l'une quelconque des revendications précédentes comprenant un moyen pour commander le ou chaque moyen d'introduction de réducteur.

8. Dispositif selon la revendication 7, dans lequel le moyen de commande est agencé, lorsqu'il est en utilisation, de façon à introduire le réducteur dans les gaz d'échappement par le premier moyen d'introduction de réducteur lorsque l'au moins un POC est entre 200 à 350°C en température.

9. Dispositif selon la revendication 7, dans lequel le moyen de commande est agencé, lorsqu'il est en utilisation, de façon à introduire le réducteur dans les gaz d'échappement par le deuxième moyen d'introduction de réducteur entre l'au moins un POC et la composition de LNC à une température supérieure à 350°C.

10. Dispositif selon l'une quelconque des revendications précédentes, dans lequel le moteur est un moteur diesel, facultativement un moteur diesel de grosse cylindrée.
